# EUROPEAN PATENT APPLICATION

(11) **EP 4 848 064 A1**
(43) Date of publication of application: **02.12.2026**
(21) Application number: 26180980.0
(22) Date of filing: 26.05.2026
(51) Int. Cl.: G06F 3/12, G06Q 30/00

(54) **INFORMATION PROCESSING APPARATUS, OPERATION METHOD OF INFORMATION PROCESSING APPARATUS, AND PROGRAM**

(30) Priority: 27.05.2025 JP 2025087719
(71) Applicant: FUJIFILM Corporation, Tokyo 106-8620 (JP)
(72) Inventor: TSUKAGOSHI, Kazuma, Saitama (JP); MORITA, Hayato, Saitama (JP); KATAYAMA, Reo, Saitama (JP); MORITA, Junya, Saitama (JP)
(74) Representative: Parker, Andrew James

(57) **Abstract**

Provided are an information processing apparatus, an operation method of an information processing apparatus, and a program. An information processing apparatus according to an aspect of the present invention is an information processing apparatus including a processor, in which in response to a request for a print image from a first terminal device that is a terminal device used by a first user, the processor is configured to refer to a history of the request from the first terminal device or a history of the request for the print image; and in a case where the history is determined to satisfy a predetermined condition, transmit the print image to the first terminal device to permit the first terminal device to cause a printer associated with the first terminal device to print the print image, and the predetermined condition is a condition based on individual identification information of the printer.

## Description

### BACKGROUND OF THE INVENTION

### 1. Field of the Invention

The present invention relates to an information processing apparatus, an operation method of an information processing apparatus, and a program.

### 2. Description of the Related Art

Regarding a system for transmitting and receiving images, for example, JP2004-199666A discloses a technology of extracting an image in which a target subject is captured and transmitting the extracted image to a user.

### SUMMARY OF THE INVENTION

An embodiment of the technology of the present disclosure provides an information processing apparatus, an operation method of an information processing apparatus, and a program.

According to a first aspect of the present invention, there is provided an information processing apparatus comprising a processor, in which in response to a request for a print image from a first terminal device that is a terminal device used by a first user, the processor is configured to refer to a history of the request from the first terminal device or a history of the request for the print image; and in a case where the history is determined to satisfy a predetermined condition, transmit the print image to the first terminal device to permit the first terminal device to cause a printer associated with the first terminal device to print the print image, and the predetermined condition is a condition based on individual identification information of the printer.

According to a second aspect of the present invention, in the information processing apparatus according to the first aspect, the processor is configured to make the determination by referring to a non-transitory and tangible recording medium in which at least the individual identification information of the printer and a transmission history of the print image to the first terminal device are recorded in association with each other, and update the history based on a result of the determination.

According to a third aspect, in the information processing apparatus according to the second aspect, the processor is configured to make the determination by referring to information indicating association between user identification information of the first user and the individual identification information, the information being recorded on the recording medium.

According to a fourth aspect, in the information processing apparatus according to any one of the first to third aspects, for the printer, the processor is configured to make the determination using, as the predetermined condition, a condition in which the number of the images transmitted to the first terminal device is less than an upper limit value of a printable number of the images.

According to a fifth aspect, in the information processing apparatus according to the fourth aspect, the processor is configured to make the determination by referring to the upper limit value set based on an image request history by the first user or an operation history related to the information processing apparatus by the first user.

According to a sixth aspect, in the information processing apparatus according to the fifth aspect, the operation history includes at least one of a comment or a reaction to the print image.

According to a seventh aspect, in the information processing apparatus according to any one of the fourth to sixth aspects, the processor is configured to make the determination by referring to the upper limit value set for each image.

According to an eighth aspect, in the information processing apparatus according to any one of the first to seventh aspects, the processor is configured to determine information indicating a billing amount for the first user by referring to information indicating a purchase price of the print image, the information being set according to the number of requests for the print image.

According to a ninth aspect, in the information processing apparatus according to any one of the first to eighth aspects, the processor is configured to receive an image from a second terminal device that is a terminal device used by a second user and register the image as the print image; and transmit information based on the history of the request from the first terminal device or the history of the request for the print image to the second terminal device.

According to a tenth aspect, in the information processing apparatus according to any one of the first to ninth aspects, the processor is configured to set the predetermined condition in response to a request from the second terminal device.

According to an eleventh aspect, in the information processing apparatus according to the ninth aspect, the processor is configured to permit printing of the print image in a predetermined period.

According to a twelfth aspect, in the information processing apparatus according to any one of the first to eleventh aspects, the processor is configured to receive designation of a subject and/or a photographer from the first user via the first terminal device; and transmit an image in which the subject is captured and/or an image captured by the photographer to the first terminal device as the print image.

According to a thirteenth aspect, there is provided an operation method of an information processing apparatus including a processor, the operation method comprising via the processor, in response to a request for a print image from a first terminal device that is a terminal device used by a first user, referring to a history of the request from the first terminal device or a history of the request for the print image; and in a case where the history is determined to satisfy a predetermined condition, transmitting the print image to the first terminal device to permit the first terminal device to cause a printer associated with the first terminal device to print the print image, and in which the predetermined condition is a condition based on individual identification information of the printer.

According to a fourteenth aspect, there is provided a program for operating a first terminal device that is a terminal device of a first user, in response to an instruction from the first user, the program causing the first terminal device to execute processing of receiving information including at least designation of a print image; processing of transmitting the received information to the information processing apparatus according to any one of first to twelfth aspects; and processing of causing a printer to print the print image received in response to the transmission of the information.

According to a fifteenth aspect, in the program according to the fourteenth aspect, the program causes the first terminal device to execute, in a case where the printing is completed, processing of prohibiting further printing of the print image.

According to a sixteenth aspect, there is provided a program for operating a second terminal device that is a terminal device of a second user, in response to an instruction from the second user, the program causing the second terminal device to execute processing of transmitting an image to the information processing apparatus according to any one of first to eleventh aspects; processing of causing the processor of the information processing apparatus to set the predetermined condition; and processing of acquiring information based on the history from the information processing apparatus and outputting the information to an output device.

It should be noted that a non-transitory and tangible recording medium on which a computer-readable code of the program according to the fourteenth to sixteenth aspects is recorded can also be mentioned as an aspect of the present invention.

### BRIEF DESCRIPTION OF THE DRAWINGS

FIG. 1 is a diagram showing a configuration of an image distribution system according to a first embodiment.
FIG. 2 is a diagram showing a configuration of a server device.
FIG. 3 is a diagram showing a functional configuration of a processor of the server device.
FIG. 4 is a diagram showing configurations of a terminal device for a celebrity and a terminal device for a fan.
FIG. 5 is a diagram (1/2) showing a processing flow in the image distribution system.
FIG. 6 is a diagram (2/2) showing the processing flow in the image distribution system.
FIG. 7 is a diagram showing an example of an account creation screen on the terminal device for a celebrity.
FIG. 8 is a diagram showing a registration example of a member supported by a fan.
FIG. 9 is a diagram showing a display example of an individual photo.
FIG. 10 is a diagram showing a display example of a time-limited photo on the terminal device for a fan.
FIG. 11 is a diagram showing an example of a processing flow of determining whether to purchase and print a photo.
FIGS. 12A to 12C are tables showing an example of a purchase ledger.
FIGS. 13A and 13B are tables showing another example of the purchase ledger.
FIG. 14 is a diagram showing an example of a screen showing a photo being printed on the terminal device for a fan.
FIG. 15 is a diagram showing an example of a screen showing a state in which printing of a photo has been completed on the terminal device for a fan.
FIG. 16 is a diagram showing an example of a screen shown in a case where a photo is not available for purchase on the terminal device for a fan.
FIGS. 17A to 17C are tables showing an example of an upper limit value of the number of printable sheets per printer.
FIG. 18 is a table showing an example of changing the number of printable sheets according to the total number of purchased sheets.
FIG. 19 is a table showing an example of a history of comments and reactions.
FIG. 20 is a table showing a setting example of the number of printable sheets according to the number of comments in a predetermined period.
FIG. 21 is a table showing an example of price setting according to the number of purchased sheets of the same photo.
FIG. 22 is a flowchart showing processing in a case where one printer is permitted to print a plurality of sheets.

### DESCRIPTION OF THE PREFERRED EMBODIMENTS

### Situation Assumed in Present Embodiment

In the present embodiment, a situation in which "The celebrity captures an image of himself/herself or a friend (a member of the same group or the like) at a live concert, a photography session, or another event and distributes the image, and a user (fan of the celebrity) views and purchases the image" or a situation in which "The staff member such as a manager captures an image of the celebrity instead of the celebrity himself/herself and distributes the image" will be assumed. In such a situation, fans of the celebrity may, in addition to the group as a whole, particularly and enthusiastically support a specific member of the group. In addition, such a "specific member who is particularly and enthusiastically supported by the fans" (specific person) may be called "favorite", "favorite person", or "favorite member" of each fan, and supporting such a specific member may be called "support". In recent years, the term "designated favorite" has been used with almost the same meaning as "favorite," to mean "the celebrity (or group or team) whom I mainly support". In addition, in a case of the celebrities who work in a group or a team, supporting the whole group or the whole team may be called "group-wide support". Furthermore, activities in which fans support their "favorite" (for example, attending events or purchasing name-bearing merchandise) are sometimes referred to as "fan activities". In the following description and the accompanying drawings, the term such as "favorite" may be used in this sense.

In addition, in the following description, the term "celebrity" is used, but a range of a person indicated by this term can be widely understood. Specifically, the "celebrity" includes so-called "idols" who appear at live concerts and various events to perform singing, dancing, and the like, but is not limited thereto, and may also mean singers, stars, actors, actresses, performers, comedians, television personalities (individuals who host or present programs), celebrities, and the like who appear in television programs, online streaming programs, films, stage productions, and the like. Further, the "celebrity" may be an athlete such as a baseball player or a soccer player. The "celebrity" may be a person who works alone or may belong to a group composed of a plurality of members, regardless of age and gender. In a case of considering the manager and other staff members in addition to the celebrity himself/herself, the term "celebrity or the like" is used below. In addition, in the following description and the accompanying drawings, the full name of the celebrity or the like, the group name, and the full name of the user may be described, but all of these are fictitious.

Hereinafter, specific aspects of an information processing apparatus, an operation method of an information processing apparatus, and a program according to the present invention will be described with reference to the accompanying drawings.

### First Embodiment

### Configuration of Image Distribution System

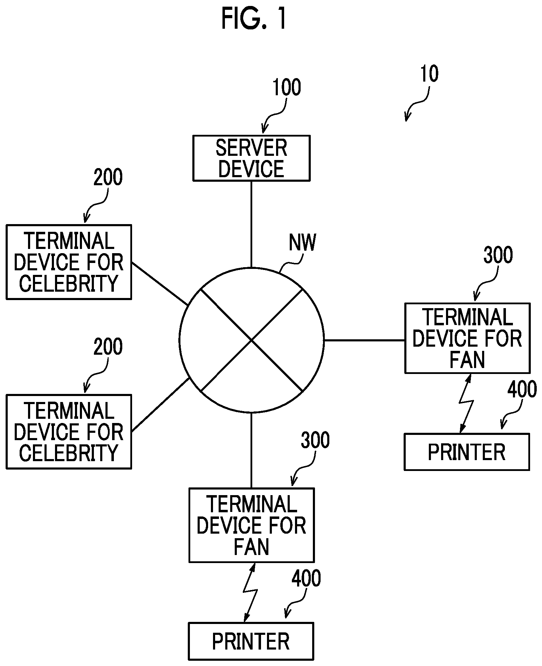

FIG. 1 is a diagram showing a configuration of an image distribution system 10 according to a first embodiment. The image distribution system 10 includes a server device 100 (information processing apparatus), a terminal device 200 for a celebrity (second terminal device), and a terminal device 300 for a fan (first terminal device), and these devices are connected to each other via a network NW. The connection may be wireless or wired. A printer 400 (printer) is connected to the terminal device 300 for a fan. The printer 400 may be independent of the terminal device 300 for a fan or may be built in the terminal device 300 for a fan. In the image distribution system 10, a plurality of server devices 100 may be present, and, in this case, the load may be distributed to the plurality of server devices. In addition, a plurality of terminal devices 200 for a celebrity and a plurality of terminal devices 300 for a fan may be present.

The image distribution system 10 transmits and receives an image to and from the terminal device 200 for a celebrity and the terminal device 300 for a fan by the above-described configuration, and distributes the image of the celebrity to the user (first user) who is the fan. In the present embodiment, the image distributed in this way, additional information such as a comment on the image, an article such as a film on which the image and the additional information are printed, and the entire service provided by the image distribution system 10 may be collectively referred to as a "photo". The "photo" may be replaced with a name (for example, "Instax" (registered trademark) manufactured by FUJIFILM Corporation) of a photo-related product or service.

### Meaning of "User" in Present Embodiment

In the present embodiment, the fan who views, purchases, or prints the photo (print image) is a "user" of the image distribution system 10 and the service thereof, but other users of the image distribution system 10 or the service thereof, that is, the celebrity (second user), the manager, and the other staff member (second user) who distribute the image may also be referred to as "users". However, in the present embodiment, for convenience of description, the term "user" is used without limitation to mean a "fan who supports the celebrity" or a "user (first user) of the terminal device 300 for a fan".

### Configuration of Server Device

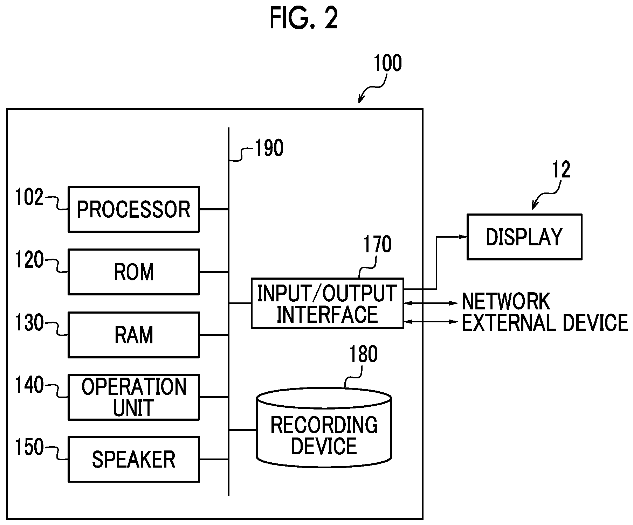

FIG. 2 is a diagram showing a configuration of a server device 100 (information processing apparatus). As shown in FIG. 2, the server device 100 comprises a processor 102 (processor), a read only memory (ROM, non-transitory and tangible recording medium) 120, a random access memory (RAM) 130, an operation unit 140, a speaker 150, an input/output interface 170, and a recording device 180 (recording device, non-transitory and tangible recording medium), and these components are connected by a bus 190 and perform communication as necessary. The recording device 180 may be incorporated in the server device 100 or may be a separate body from the server device 100. A display 12 (display device) is connected to the server device 100. In addition, the server device 100 communicates with the terminal device 200 for a celebrity and the terminal device 300 for a fan via the input/output interface 170 and the network NW under the control of the processor 102.

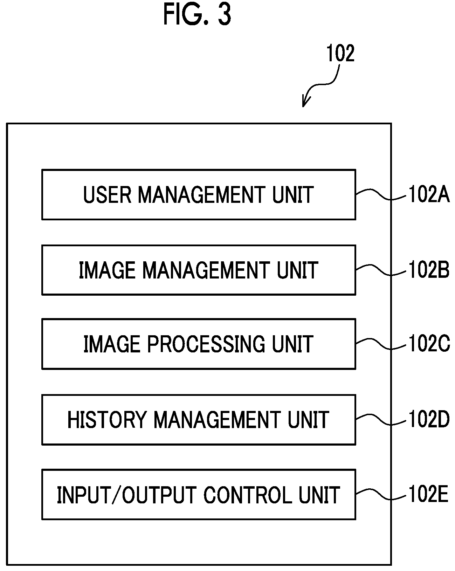

FIG. 3 is a diagram showing a functional configuration of the processor 102. Hereinafter, an outline of these functions will be described. A user management unit 102A performs registration, deletion, change of registration information, management of billing and points associated with use of the service, and the like, for accounts of the celebrities and the fans. An image management unit 102B controls recording (input/output) of the image in the recording device 180, and extracts the image based on the identification information of the celebrity or the like from the image posted by the celebrity (image received from the terminal device 200 for a celebrity by the server device 100; the above-described "photo"). The image management unit 102B can extract, for example, an image desired to be purchased by the fan or an image recommended to be purchased as the photo. An image processing unit 102C performs image processing (addition of a frame or an illustration, enlargement/reduction of the image, deformation, compositing of a plurality of images, and the like) on the extracted image based on an instruction of the user, attribute information, and the like.

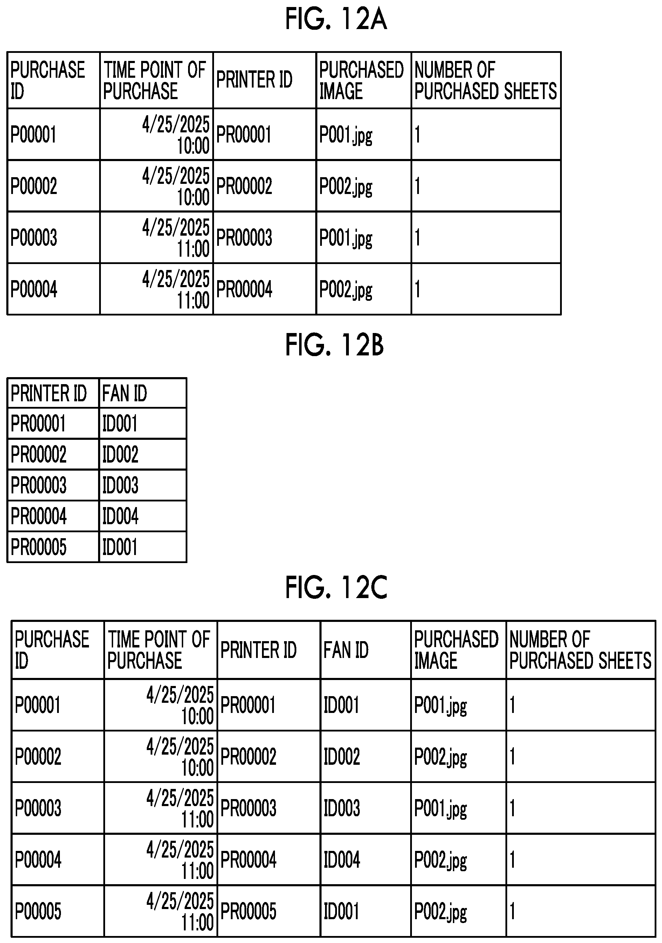

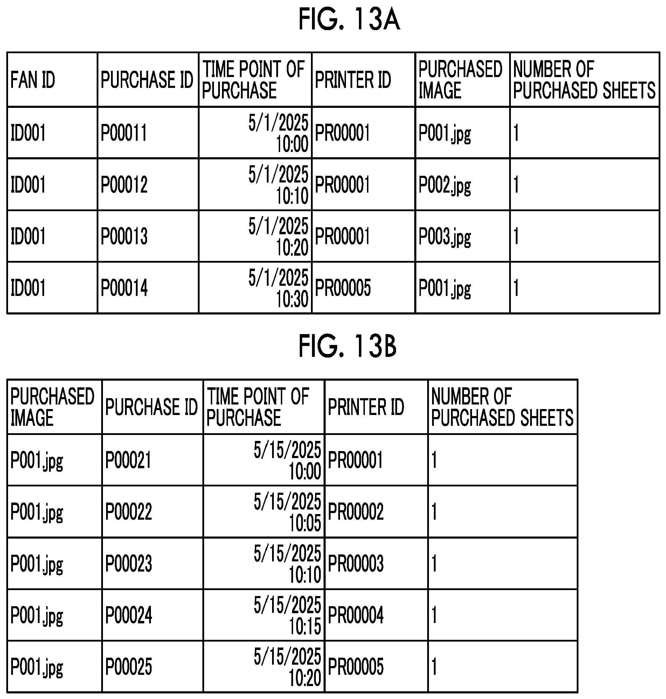

A history management unit 102D records and updates a history of uploading the image by the celebrity, a purchase history of the photo by the fan, an operation history (including a history of at least one of a comment or a reaction), and the like. These histories are recorded in the recording device 180 (see examples in FIGS. 12 and 13). An input/output control unit 102E controls communication with the terminal device 200 for a celebrity and the terminal device 300 for a fan via the input/output interface 170, performs transmission and reception of account information or the image, display control, and the like, and controls input and output of information with the recording device 180.

For example, the processor 102 is configured by various processors or electric circuits such as a central processing unit (CPU), a graphics processing unit (GPU), a field programmable gate array (FPGA), and a programmable logic device (PLD). The functions of the processor 102 need not always correspond one-to-one to the processors and electric circuits. A plurality of functions may be executed by one processor or the like, and one function may be executed by a plurality of processors or the like. In a case where these processors or electric circuits execute software (program), computer-readable code of software to be executed is stored in a non-transitory tangible recording medium such as the ROM 120, and the computer refers to the software. The term "computer" means, for example, various processors or electric circuits constituting the processor, and/or a combination thereof.

The software stored in the non-transitory tangible recording medium includes a program that performs transmission and reception of the image, image extraction, image processing, and the like, and data used in the execution of the program. The code may be recorded on a non-transitory and tangible recording medium such as a flash ROM or an electronically erasable and programmable read only memory (EEPROM) instead of the ROM 120. The "non-transitory and tangible recording medium" does not include intangible recording media such as carrier-wave signals or propagated signals themselves. In processing using the software, the RAM 130 is used as a temporary storage area or a work area.

Processing using the processor 102 having the above-described configuration will be described in detail later.

### Configuration of Recording Device

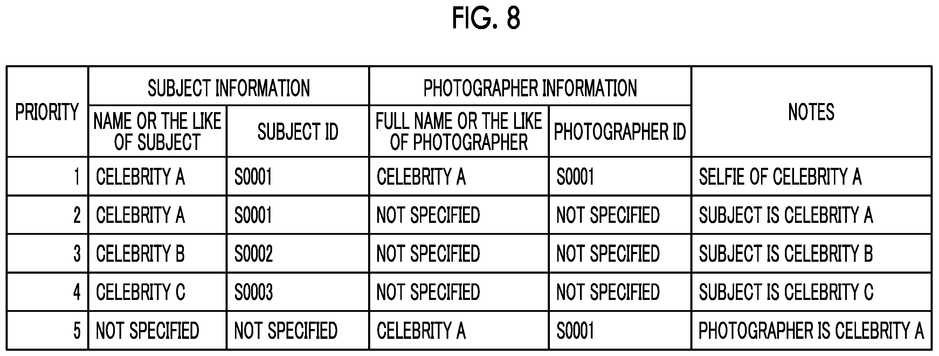

The recording device 180 is configured by a recording medium (non-transitory tangible recording medium) such as a hard disk, a semiconductor memory, and various magneto-optical recording media, and a control unit thereof, and records or stores various types of information. The information recorded in the recording device 180 may include account information of the celebrity and the fan, an image received from the terminal device 200 for a celebrity, and information about the celebrity followed by the fan (see an example in FIG. 8 described below). The "celebrity followed by the fan" may be a celebrity that the fan particularly supports enthusiastically or a celebrity whose photos the fan wishes to receive (for example, the "favorite" or "designated favorite" described above).

In addition, in the recording device 180, identification information and attribute information are recorded in association with each other for the celebrity and the fan. The "identification information" is information for uniquely specifying a person, and is, for example, a full name, a stage name, a nickname, or an ID in a case of the celebrity or the like, and is, for example, an ID (an example of user identification information), a full name, or a registered name in a case of the fan. The "attribute information" is, for example, whether the user is the celebrity himself/herself or the staff member such as the manager, a name of a group or a subgroup (or the team) to which the celebrity belongs, or whether the fan is a paid member or a free member. In a case where the identification information (full name or the like) of a certain person is given, the server device 100 (processor 102) can know the attribute information of the person by referring to the recording device 180 with the identification information as a key. On the contrary, in a case where the attribute information (for example, whether the user is the celebrity himself/herself or the manager) is determined, the identification information of the person (not necessarily one person) having the attribute information can be extracted.

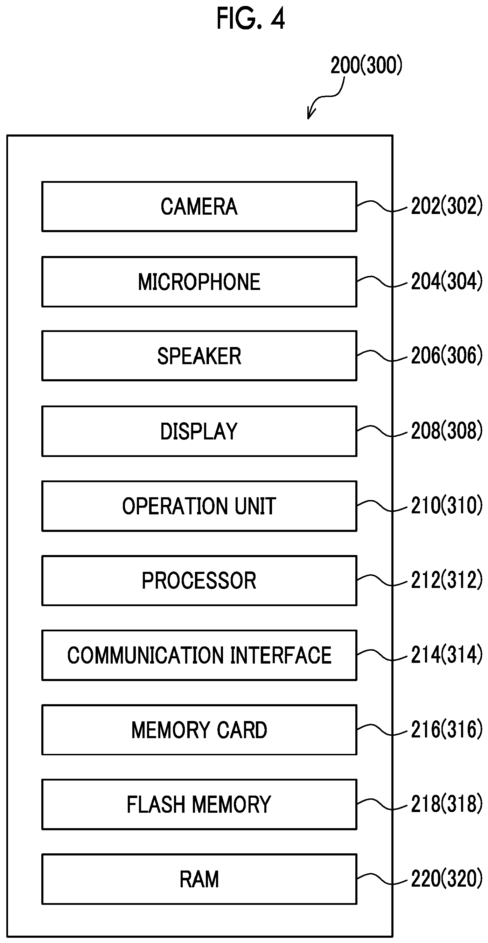

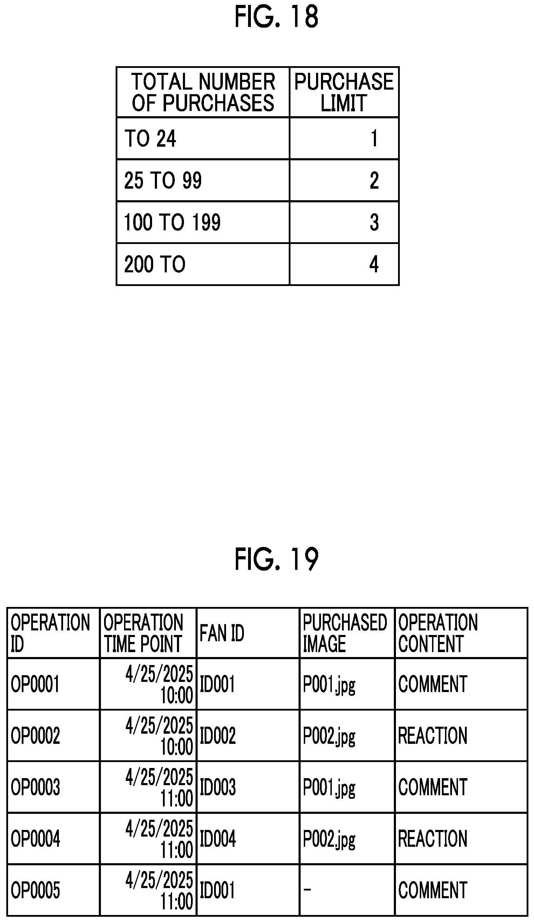

Further, the recording device 180 records a purchase history of photos by the fan (see examples in FIGS. 12 and 13 described below; a transmission history of a print image from the server device 100 to the terminal device 300 for a fan; or a request history from the terminal device 300 for a fan to the server device 100, or a request history for the print image), and an operation history (including a history of at least one of a comment or a reaction) (see an example in FIG. 19 described below). The information recorded in the recording device 180 can be displayed on the display 12 (display device) or the display 208 (display device) of the terminal device 200 for a celebrity (see FIG. 4) automatically in response to an operation of the celebrity or the like or without depending on the operation.

### Configuration of Terminal Device for Celebrity and Terminal Device for Fan

FIG. 4 is a diagram showing configurations of the terminal device 200 for a celebrity (second terminal device) and the terminal device 300 for a fan (first terminal device). In FIG. 4 and the following description, reference numerals in parentheses indicate the configuration of the terminal device 300 for a fan.

The terminal device 200 for a celebrity comprises a camera 202, a microphone 204, a speaker 206, a display 208, an operation unit 210, a processor 212, a communication interface 214, a memory card 216, a flash memory 218, and a RAM 220. The camera 202 captures an image of the celebrity himself/herself or another person as a subject to acquire the image. The subject need not be a person. The captured image can be added with audio input via the microphone 204, and the input audio or the like can be output from the speaker 206. The captured image can be recorded in the memory card 216 that is attachable and detachable. The display 208 is a touch panel type display, and a user (celebrity or the like; second user) of the terminal device 200 for a celebrity can perform an operation such as tapping or flicking on the display 208. The operation unit 210 includes, for example, various buttons, switches, and the like, but the functions of these members may be executed by the display 208.

The processor 212 is configured by various processors and electric circuits as in the processor 102 described above, and manages various types of processing executed by the terminal device 200 for a celebrity. In a case where the processor 212 performs processing, the program or the data stored in the flash memory 218 (non-transitory tangible recording medium) is referred to, and the RAM 220 is used as a temporary storage area and a work area. Communication between the terminal device 200 for a celebrity and the server device 100 is performed via the communication interface 214.

### Functions of Terminal Device for Celebrity

The program stored in the flash memory 218 has functions such as registration, correction, and deletion of an account of a celebrity or the like, capturing, editing, and recording of an image, posting of a photo, inputting of a message or an emotion color for the photo, and viewing of a comment or a reaction from a user. These functions can be realized by installing application software (program for operating the second terminal device; hereinafter, referred to as "second program") dedicated to a general smartphone, a general tablet terminal, a general personal computer, or the like.

The second program can cause the terminal device 200 for a celebrity (second terminal device) to execute processing of transmitting an photo image (print image) to the server device 100 (information processing apparatus according to one aspect of the present invention) in response to an instruction from a celebrity or the like (second user), processing of causing the processor 102 of the server device 100 to set a predetermined condition, and processing of acquiring, from the server device 100, information based on a history of requests from the terminal device 300 for a fan (first terminal device) or a history of requests for the print image and outputting the information to the output device (display 208 or the like). Here, the "information based on the history" may be the history itself or may be an analysis result of the history (statistical information, an image suggested for printing to the first user based on the history, or the like). In addition, the "predetermined condition" is a condition for permitting printing of a photo based on the individual identification information of the printer. Details of this condition will be described later.

In addition to the celebrity himself/herself, the staff member such as the manager may use the terminal device 200 for a celebrity. In this case, it is possible to install application software having different functions (for example, presence or absence of authority to approve photo posting) depending on whether the user of the terminal device is the celebrity himself/herself or a manager or the like (difference in attribute information), or to restrict or release the functions of the same application software depending on the identification information or the attribute information. That is, the terminal device 200 for a celebrity can also serve as a terminal for the celebrity himself/herself and a terminal for the manager, but these terminals may be independent devices.

### Functions of Terminal Device for Fan

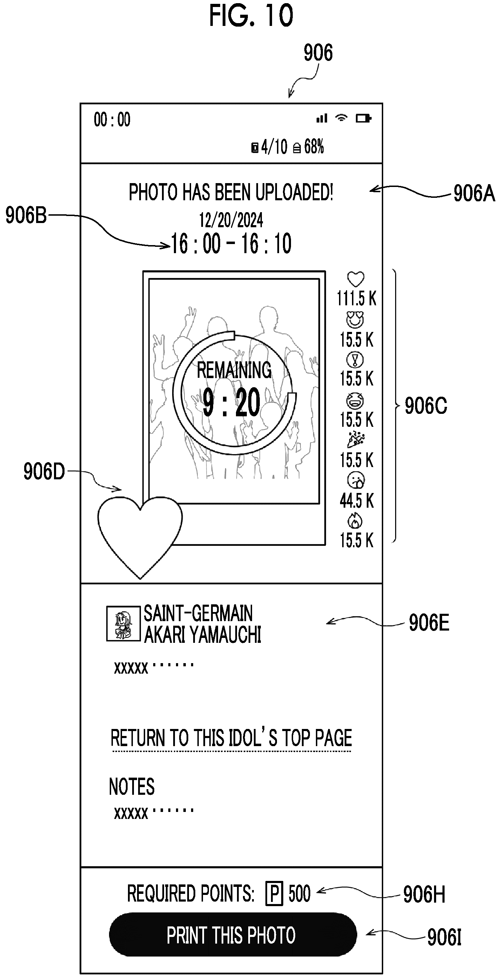

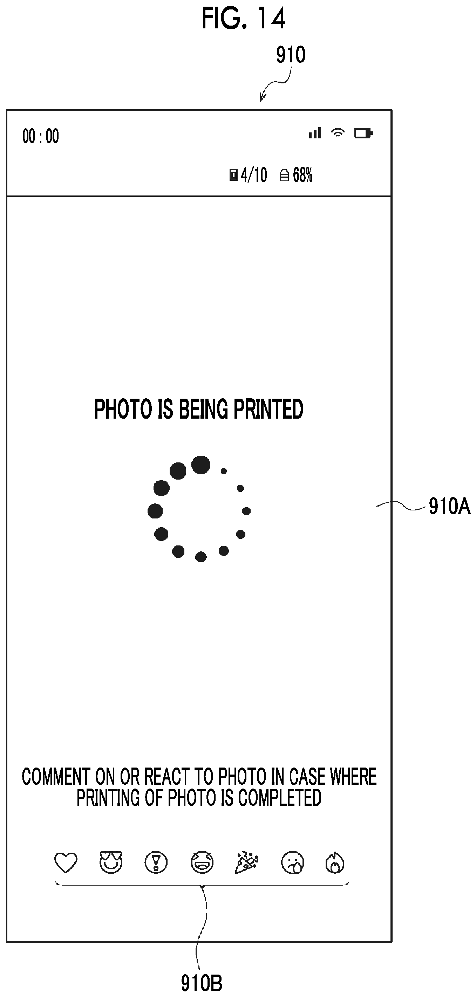

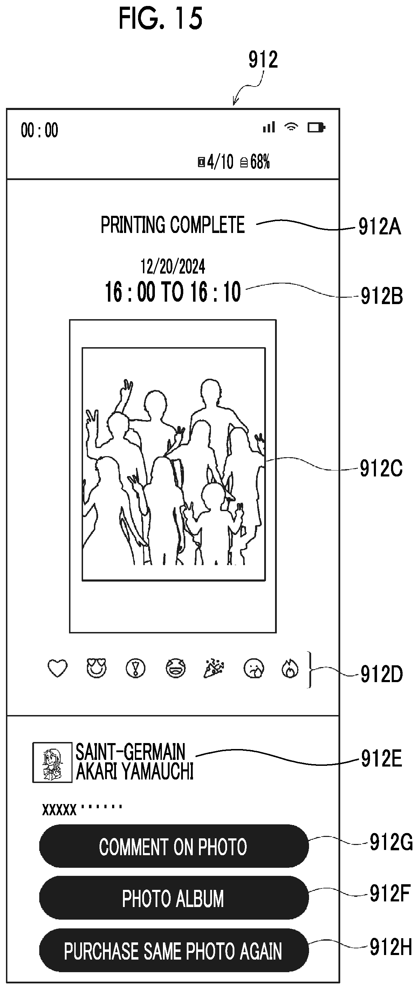

As shown in FIG. 4, the terminal device 300 for a fan comprises a camera 302, a microphone 304, a speaker 306, a display 308, an operation unit 310, a processor 312, a communication interface 314, a memory card 316, a flash memory 318, and a RAM 320. The fan (first user) can perform searching and setting of the celebrity to be followed (the "favorite" or "designated favorite" described above) (for example, see FIG. 8), viewing, purchasing, and printing of photos (for example, see FIGS. 10 and 14 to 16), inputting of a message or a reaction to the photo (for example, see FIGS. 14 and 15), and the like using the terminal device 300 for a fan. As in the case of the terminal device 200 for a celebrity described above, the functions of the terminal device 300 for a fan can be implemented by installing application software (program for operating the first terminal device; hereinafter, referred to as "first program") dedicated to a general smartphone, a tablet terminal, a personal computer, or the like.

The first program can cause the terminal device 300 for a fan (first terminal device) to execute processing of receiving information including at least designation of a print image (photo for which the fan wishes to print) in response to an instruction from the user (first user) who is the fan, processing of transmitting the received information to the server device 100 (information processing apparatus according to one aspect of the present invention), and processing of causing the printer 400 (an example of "printer associated with the terminal device 300 for a fan") to print the image for the photo (print image) received in response to the transmission of the information.

### Configuration of Printer

The printer 400 (printer) is a printer that performs communication (which may be wireless communication or wired communication) with the terminal device 300 for a fan (first terminal device) and prints the photo purchased by the fan. In addition, the printer 400 may be built in the terminal device 300 for a fan or may be independent. It should be noted that the printer 400 has individual identification information (information for uniquely specifying the type of the printer or each device; serial number or the like) and is associated with a specific terminal device 300 for a fan (see examples in FIGS. 12A to 12C described below). The printer 400 can print the photo in accordance with the control of the terminal device 300 for a fan and can perform other processing on the image of the photo (for example, prohibiting further printing after the printing is ended (successful), erasing the image of the photo after the printing, or the like).

The type of the printer 400 is not limited, but may be limited to a portable type or a type using an instant film. Such a restriction can be realized by recognizing the individual identification number of the printer 400 using application software (for example, the first program described above) installed in the terminal device 300 for a fan. The instant film may be, for example, a self-developing type instant film. In this case, one surface is an exposure surface, and the other surface is an observation surface. An exposure region, a pod portion, and a trap portion are provided on the exposure surface, an observation region is provided on the observation surface, and the image is printed in the observation region. After the exposure, the instant film is subjected to the development treatment by spreading the development treatment liquid of the pod portion in the exposure region. In a case of transporting the instant film, a roller pair provided in the printer crushes the pod portion to spread the development treatment liquid.

### Processing Flow of Image Distribution System

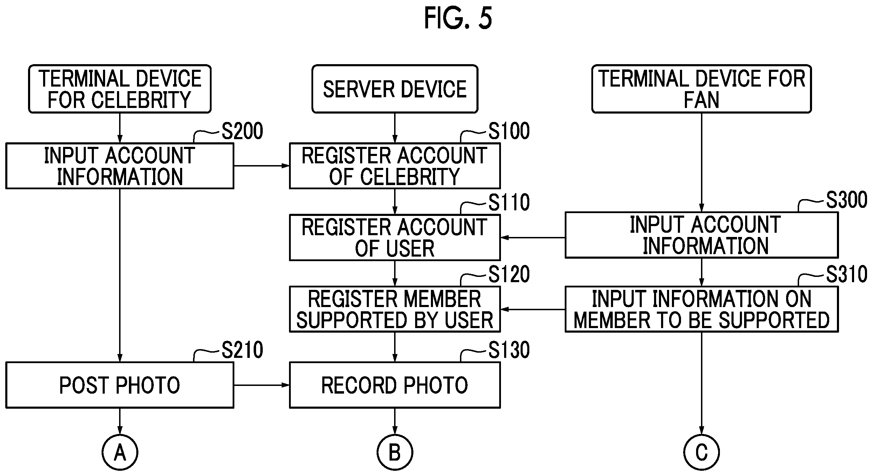

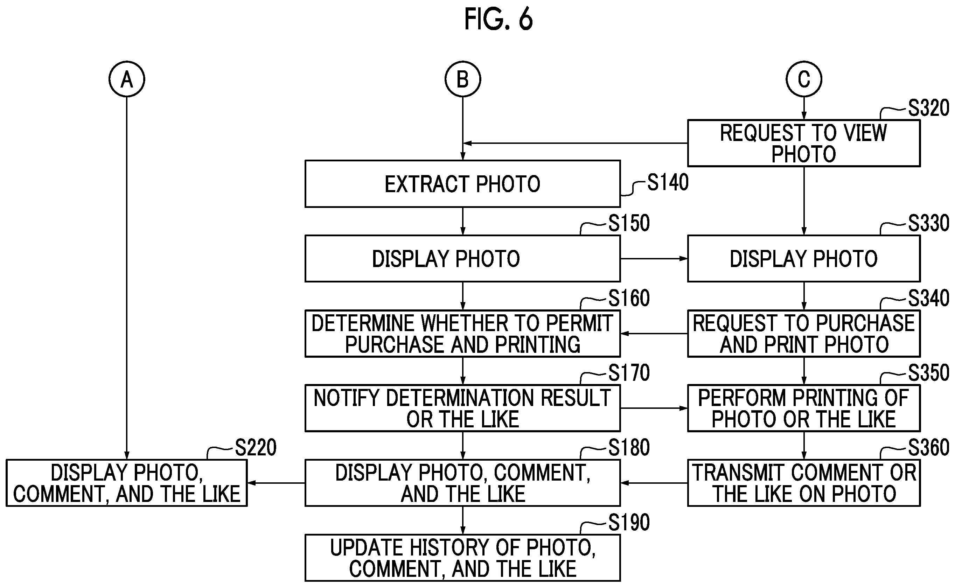

FIGS. 5 and 6 are diagrams showing a processing flow in the image distribution system 10. The following processing flow shows an example of processing, and the processing may be executed in a procedure different from this example. For example, the order of communication between the terminal device 200 for a celebrity and the server device 100 and communication between the terminal device 300 for a fan and the server device 100 may be changed, or necessary processing may be repeated. In addition, the server device 100 may perform processing in parallel with the plurality of terminal devices 200 for a celebrity and the plurality of the terminal devices 300 for a fan.

### Registration of Account

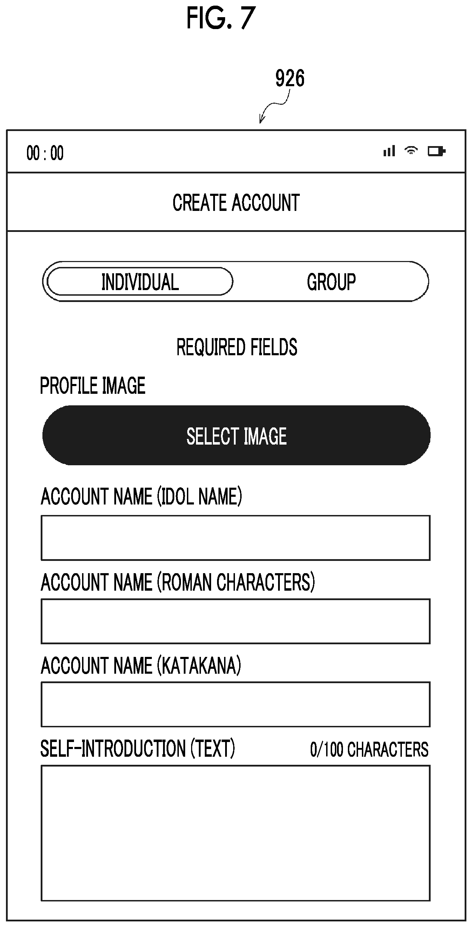

The celebrity or the like (as described above, the celebrity himself/herself or the staff member such as the manager) starts the application of the image distribution system and inputs the information on the account using the terminal device 200 for a celebrity (step S200). For example, as shown in a screen 926 of FIG. 7 (a diagram showing an example of an account creation screen on the terminal device 200 for a celebrity), an ID (identification information) such as an account name, a self-introduction, a profile image, and the like are input. Other fields (a contact e-mail address, an SNS account, a password, a nickname, and the like) may be input. The server device 100 registers the account of the celebrity or the like based on this information (step S100). Specifically, the server device 100 records the identification information, the attribute information, the account information, and the like of the celebrity or the like in association with each other in the recording device 180. Similarly, the fan (a user who supports the celebrity) inputs the information on the account using the terminal device 300 for a fan (step S300), and the server device 100 registers the account of the fan (user) based on the information (step S110).

It is preferable that the server device 100 assigns a photographer ID (identification information of a photographer) and a subject ID (identification information of a subject) to the celebrity or the like in a case of registering the account of the celebrity or the like (step S100). The two IDs may be common. As will be described below, the server device 100 can use the IDs in a case of extracting the image of the celebrity supported by the fan. The server device 100 can associate the photographer ID with the identification information of the terminal device and can associate the subject ID with the image of the celebrity or the like.

### Registration of Celebrity Supported by Fan

The fan inputs information on a celebrity whom the fan particularly supports (the "favorite" or "designated favorite" described above), that is, the information on the celebrity whose photo is desired to be purchased or printed, using the terminal device 300 for a fan (step S310). The registration may be made for one person or a plurality of persons, and a subgroup or a team constituting a group, or the entire group, may be registered. In addition, a plurality of groups or the like may be registered. The input can be performed, for example, by the fan tapping and selecting a preferred celebrity from a display list of the full names of the celebrities, the group names, and the representative photos displayed on the display 308 or the like. In addition, the fan may search for and select a celebrity that is not in the display list. The server device 100 registers the members, the groups, or the like particularly supported by the fan in response to the information input (step S120). The server device 100 can register the identification information of the fan, the identification information of the member particularly supported by the fan, and the like in the recording device 180 in association with each other. It is preferable that the server device 100 registers these pieces of information and the individual identification information of the printer 400 in association with each other.

FIG. 8 is a diagram showing a registration example of the member supported by the fan (the celebrity whose photo is desired to be purchased or printed). This information is associated with the identification information (fan ID, user ID, or the like) of the fan and/or the individual identification information of the printer 400. As shown in FIG. 8, a priority can be set for the member supported by the fan. In the example of FIG. 8, the image with the highest priority is an image in which celebrity A takes a "self-photographed image" (the photographer captures the image of himself/herself and serves as the subject; also referred to as a "selfie"), and the image with the next highest priority is an image whose subject is celebrity A. Such registration may include designation of the subject (the name, the nickname, or the like of the subject or the subject ID) and/or designation of the photographer (the name, the nickname, or the like of the photographer or the photographer ID). For example, in FIG. 8, the image captured by the celebrity A (the image captured from the perspective of the celebrity A) is ranked fifth in priority.

The server device 100 can suggest the photo of the celebrity to the fan (user) with reference to the information registered in this way, and thus the fan can easily purchase the photo of the celebrity whom the fan wants to support.

### Posting of Photo

The celebrity or the like captures an image of the subject with the camera 202 of the terminal device 200 for a celebrity to acquire the image, and posts the photo using the image. Specifically, the terminal device 200 for a celebrity transmits the image and the additional information such as the comment on the image to the server device 100 (transmission/reception control device) (step S210). In this case, it is preferable to transmit the identification information of the photographer in association with the image or the like. In a case of posting the photo, the celebrity or the like can check the layout of the photo on the display 208, and can input the color (the "emotion color") representing the current feeling or the comment, and can further designate the distribution start date and time, the print point, or the like. The subject may be a person or may not be a person (for example, the inside of the dressing room or backstage, various small objects, a landscape, an animal, a plant, or the like). In addition, in a case of capturing the person, as described above, the user may capture the image of himself/herself or may capture the image of another celebrity or the like. The number of persons to be captured may be one or more.

### Recognition of Subject

In a case of recording the photo, the server device 100 can acquire the identification information (subject ID) of the subject by analyzing the image received from the terminal device 200 for a celebrity and recognizing which person the subject in the image is. In addition, the server device 100 may recognize the subject by using a recognizer constructed by a machine learning algorithm. Such a recognizer can be constructed by training a neural network such as a convolutional neural network (CNN) using, as learning data, the image and the identification information of the subject. Another method of machine learning may be used. In addition, the server device 100 may reflect the recognition of the subject in the analysis of the content of the comment added to the image by artificial intelligence. For example, in a case where the comment is "We took a photo with Mr./Ms. A!", it can be estimated that one of the plurality of persons is "Mr./Ms. A". In addition, in a case where the comment by the celebrity B is "I tried taking a selfie for the first time in a while!", it can be estimated that the subject is the celebrity B. In a case where the recognition result of the subject estimated in this way is inappropriate, the celebrity or the like can correct the recognition result via the terminal device 200 for a celebrity. In addition, the celebrity or the like may explicitly input information about the photographer or the subject in a case of posting the photo.

The server device 100 records the posted photo in the recording device 180 in association with the identification information of the photographer and the identification information of the subject obtained by the recognition or the input (step S130), and publishes the photo immediately after the posting or at the designated delivery date and time.

### Approval in Case of Posting Photo

In a case where the celebrity posts the photo, the posting may be subject to approval by a person having approval authority, such as the manager. The person having approval authority can check the content of the image or the comment, the recognition result of the subject, the delivery date and time, and the like, approve the posting in a case where there is no problem, and request the celebrity to make corrections as necessary. The person having approval authority can perform the approval using the terminal device 200 for a celebrity.

### Extraction and Display of Photo

In a case where the fan (user) requests the server device 100 to view the photo (step S320), the server device 100 extracts the photo based on the identification information of the celebrity that the user particularly supports (see the example in FIG. 8) from the photos posted by the celebrity or the like (photos received from the terminal device 200 for a celebrity) (step S140), displays the photo on the terminal device 300 for a fan (step S150), and can suggest printing of the photo. In this case, the server device 100 can display the photo according to the priority as shown in FIG. 8. For example, the photo having a high priority can be displayed at a position near the top of the display list, or can be displayed in a large size. In a case where a comment, an "emotion color", or the like is added to the image, it is preferable to extract and display the information together. The server device 100 can immediately extract and display the photo after the above-described approval (within the set date and time or period in a case where the delivery date and time or period is set). The terminal device 300 for a fan (first terminal device) displays the photo transmitted from the server device 100 on the display 308 (step S330).

### Display Example of Photo

### Individual Photo

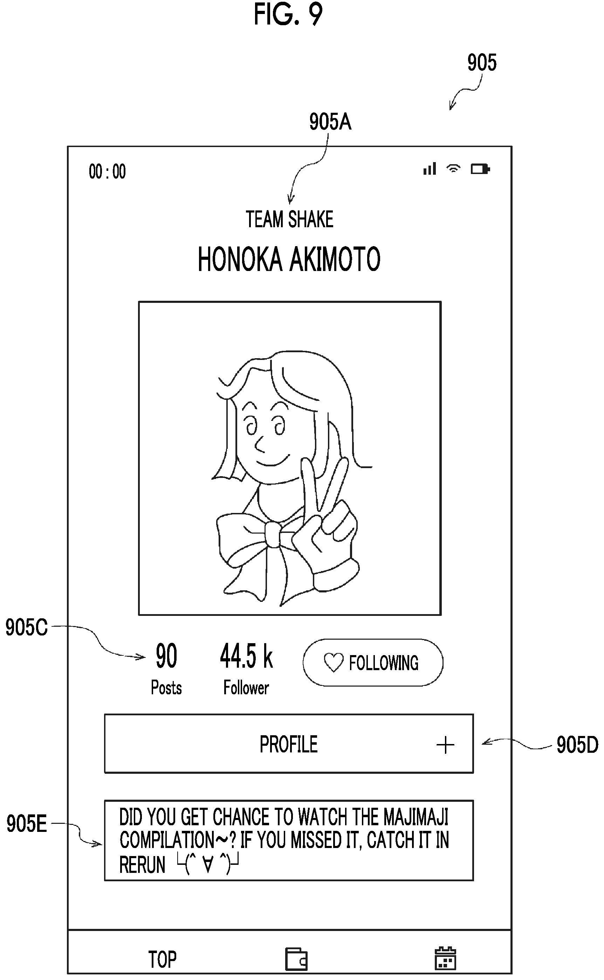

FIG. 9 is a diagram showing a display example of an individual photo. In a case where the user (fan) selects the photo from the display list, the screen transitions to a screen for displaying the individual photo. In a region 905A, the full name of the celebrity (which may be a name) and the group name in a case of belonging to the group are displayed. In a region 905C, the number of photos distributed, the number of followers, and an icon indicating whether the user is following are displayed. In addition, in a case where "+" (addition or plus sign) in a region 905D is tapped, the region 905D is expanded and a profile of the celebrity is displayed. In a case where the region 905D is expanded, the above-described cross mark changes to a "-(subtraction or minus sign)", and in a case where the "-" is tapped, the display of the profile is closed (collapsed). A message from the celebrity is displayed in a region 905E. In addition, the photos of the celebrity may be displayed in a display list below the region 905E (not shown in FIG. 9).

### Time-Limited Photo

The server device 100 can limit the purchase or printing of the photo to a predetermined period (10 minutes, 60 minutes, 24 hours, or the like) (time-limited photo) based on the designation of the celebrity or the like, thereby enhancing the scarcity of the photo or the event nature of the photo publication, and satisfying the desire to own the photo by the fan (first user).

FIG. 10 shows a display example of the time-limited photo in the terminal device 300 for a fan. FIG. 10 shows a state where the photo is uploaded and is in a state where the photo can be purchased and printed. In a screen 906 shown in FIG. 10, a notification that the photo is uploaded is displayed in a region 906A. The content of the notification sentence may be changed between a normal photo and a special photo (premium photo; for example, a photo to which coloring or other decoration is applied, or a photo to which a message or a signature of a celebrity or the like is added). A distribution period of the photo (period in which the photo can be purchased and printed) is displayed in a region 906B.

A photo image is displayed in a region 906C with a frame. The photo image is in an obscured state before printing, and is clearly displayed after printing. In the present embodiment, a period during which the photo can be purchased and printed may be limited, and in the example shown in FIG. 10, a remaining time from the start of the distribution of the photo is displayed in a countdown manner in the region 906C. In a case where the count reaches zero, the display pattern is changed, and the fact that the photo cannot be purchased and printed is displayed. In addition, in the screen 906, the background of the photo is displayed in a color or a pattern selected by the user or the celebrity. In the premium photo, a sense of luxury may be created by changing the background, the color of the frame, the pattern, and the like from those of the normal photo.

The number of reactions to the photo by the users who have already performed printing is displayed in the region 906C. Different icons correspond to different reactions. In a region 906D, an icon (heart mark in the example shown in FIG. 10) of the reaction with the largest number among the reactions by the users who have already performed printing is displayed in a large size in a case where the screen 906 is opened by the user. A region 906E is a comment area, and a full name (or name) of a sender (celebrity or the like), the affiliation (group name or the like), the representative image, and the comment are displayed.

In a case in which the user taps a label 906F, the user returns to a top screen (a screen on which the posted photos are displayed in a display list or the like) of the celebrity. In a region 906H, the points required for purchasing the photo are displayed. An amount of money may be displayed as the consideration for the purchase, or points corresponding to the amount of money may be displayed without explicitly displaying the amount of money. In a case where the user taps a region 906I, the screen transitions to the screen for the photo purchase and printing.

The server device 100 may change the display mode on the terminal device 300 for a fan with the passage of time. For example, the resolution of the photo can be set to be low immediately after the start of the distribution, and the resolution can be increased in accordance with the elapsed time from the start of the distribution period (after the purchase, the photo is displayed at a normal resolution). By implementing such measures, it is expected that enthusiastic fans (users), thinking, for example, "I'd like to purchase the photo of the celebrity I support even in a case where I cannot check the photo in detail" or "I want to purchase the photo as early as possible", will purchase immediately after the start of distribution, whereas less enthusiastic fans, thinking "I will purchase after the photo becomes clearly displayed to check the contents", will purchase after a certain delay from the start of distribution, and thus the overall timing of purchases is dispersed, thereby achieving load leveling of the server device 100. Similarly, the server device 100 may vary the cost of purchasing photos (for example, price or points consumed) over time (for example, high cost immediately after the start of distribution and lower cost as time elapses). Even with such processing, the timing of purchase is distributed, and the load on the server device 100 can be leveled.

### Service in Accordance with Attribute Information of User

In the image distribution system 10, different photos may be displayed on the terminal device 300 for a fan according to the attribute information of the user. In addition, for example, a difference may be provided in which the paid member can view both a "close-up" photo (photo in which the celebrity is captured close to the camera) and a "distant" photo (photo in which the celebrity is captured from a distance), but the free member can view only the "distant" photo. Whether the user is a paid member or a free member is an example of the attribute information. In addition, the paid member may be finely classified (for example, a regular member and a premium member), and the service content may be differentiated in accordance with the classification. For example, it is possible to differentiate the type of printable photo or the number of photos that can be purchased per month (the number of printable photos).

The server device 100 (the image processing unit 102C or the like; the processor) may process the image of the photo based on the attribute information such as the membership type of the fan, and display the processed image on the terminal device 300 for a fan. There is an example of "free members or regular members may be unable to process images, whereas paid members or premium members may be able to do so". In a case of performing such compositing, the server device 100 may composite a plurality of images of the same celebrity. For example, it is considered to composite a plurality of images in which the image of the celebrity A is captured from different directions (front, oblique, and the like) by the celebrity B and the manager C (divide the same photo into a plurality of regions and arrange a plurality of images). In addition, for example, the fan may register his/her own image, and the fan may be able to composite his/her own image with the image of the celebrity. By such compositing, the user can experience a feeling as though the user is captured together with the celebrity.

### Purchase and Printing of Photo

The fan (first user) requests the purchase and printing of the desired photo (print image) via the terminal device 300 for a fan (first terminal device) (step S340). The server device 100 (the processor 102; the image management unit 102B, the history management unit 102D, and the like) determines whether to permit the purchase and printing of the photo in response to the request (step S160), and notifies (transmits) the terminal device 300 for a fan of a determination result or the like (a message indicating permission or non-permission, the photo image, and the like) (step S170). The server device 100 can determine whether to permit the purchase and printing of the photo by referring to the history of the request from the terminal device 300 for a fan or the history of the request for the print image, but these histories can be referred to each other via the printer ID or the like as shown in the examples of FIGS. 12A to 13B described later, so that the server device 100 may determine whether to permit the purchase and printing of the photo by referring to both histories.

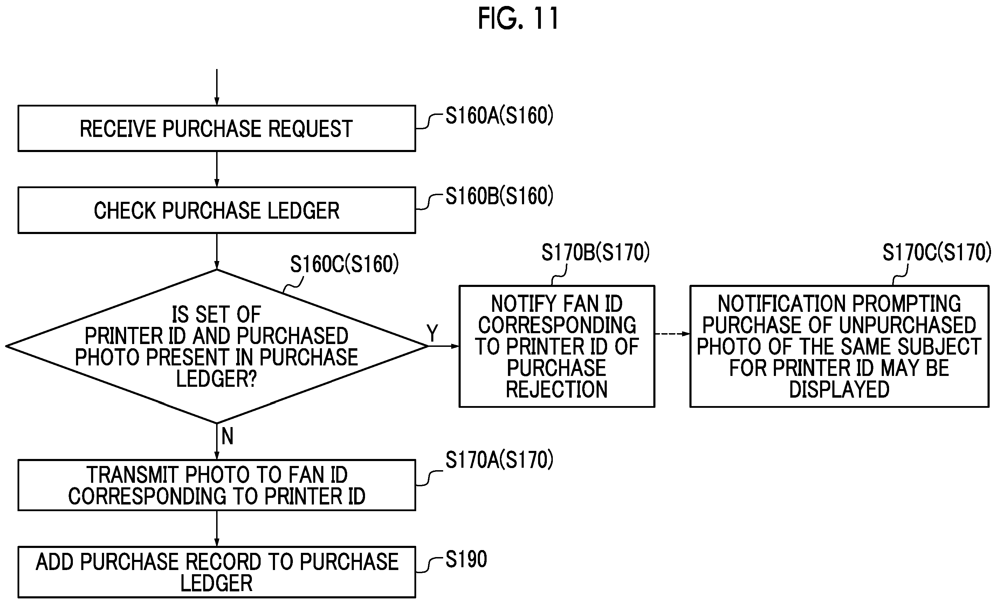

FIG. 11 is a flowchart showing details of processing related to the determination in the server device 100 (mainly, details of processing in S160 and S170). In a case where the server device 100 (the image management unit 102B, the history management unit 102D, and the like) receives the purchase and printing request from the terminal device 300 for a fan (step S160A; step S160), the server device 100 checks the purchase ledger (history) (step S160B; step S160).

### Purchase Ledger

The purchase ledger is information indicating the purchase history or the transmission history of an photo image (print image), and the server device 100 (the history management unit 102D and the like) can record the purchase ledger in the recording device 180 (the non-transitory and tangible recording medium) and can update the purchase ledger by using the printer ID, the fan ID, the image ID, the purchase ID, and the like as keys. The server device 100 can record, for example, at least the printer ID (individual identification information) of the printer 400 and the transmission history of the print image to the terminal device 300 for a fan (first terminal device) in association with each other. An aspect of the recording of the purchase ledger (which fields are recorded in the ledger) is not limited to one. In addition, the purchase ledger may be divided into a plurality of ledgers, but in this case, it is preferable to provide a common field (for example, the printer ID, the fan ID, the purchase ID, and the like) in the plurality of ledgers such that the plurality of ledgers can be referred to via the field.

The server device 100 (the history management unit 102D and the like) can analyze the purchase ledger (history) and recommend the photo (recommend or suggest the photo to be purchased and printed) to the user. In addition, the server device 100 can analyze the purchase ledger to ascertain which photo of which celebrity is purchased at what timing in which event, and can output the result to the celebrity or the like (the terminal device 200 for a celebrity), whereby the celebrity or the like can consider which photo to register and which event to perform. In addition, the celebrity or the like can view the purchase ledger or the analysis result thereof (display on the display 208) via the celebrity terminal device (second terminal device).

### Example of Purchase Ledger

FIG. 12A to FIG. 12C are tables showing an example of the purchase ledger. FIG. 12A is a purchase history including the printer ID, and includes information on "which image is purchased by which printer ID, and how many prints are purchased at what time". FIG. 12B is a table showing an example of the association between the printer ID and the fan ID, and in this example, one printer ID corresponds to one fan ID. In addition, FIG. 12C shows an example in which the purchase ledger shown in FIG. 12A and the association shown in FIG. 12B are merged into one purchase ledger based on the correspondence between the printer ID and the fan ID.

In the image distribution system 10 according to the present embodiment, one fan ID can correspond to a plurality of printer IDs, that is, one user can register a plurality of printers with one user account. In the example shown in FIG. 12B, the printer IDs "PR00001" and "PR00005" correspond to one fan ID "ID001". Such registration is allowed in consideration of a situation in which one fan (user) owns a plurality of printers having different film sizes and aspect ratios. The server device 100 may prohibit the opposite situation (one printer is shared by a plurality of users and registered in the image distribution system 10). This restriction is because it is considered that it is preferable that one user owns at least one printer in consideration of time-limited print in a short time, a response to an event or the like in consideration of the position information of the user (or the position information of the printer), and the like.

FIGS. 13A and 13B are tables showing another example of the purchase ledger. FIG. 13A is an example of the purchase ledger with the fan ID as a key, and FIG. 13B is an example of the purchase ledger with the ID of the photo image as a key. Any purchase ledger includes information on "which image is purchased by which printer ID (individual identification information of the printer), and how many prints are purchased at what time". The purchase ledger may include other information (ID of the photographer or the subject, attribute information of the user, elapsed time from the start of the event to the purchase, and the like). The server device 100 (history management unit 102D or the like; processor) can merge the purchase ledgers shown in FIGS. 13A and 13B with reference to the association between the printer ID and the fan ID as shown in FIG. 12B.

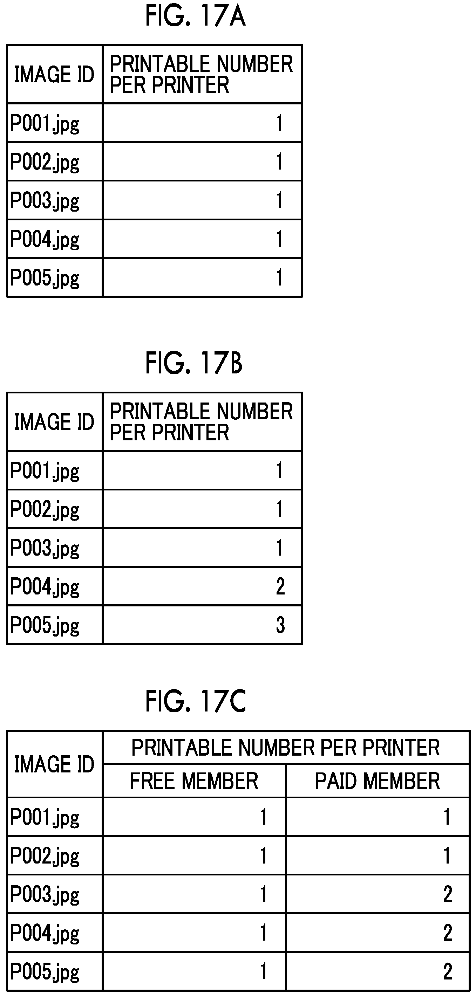

The server device 100 (image management unit 102B, history management unit 102D, or the like; processor) refers to (checks) the purchase ledgers shown in FIGS. 12A to 13B (Step S160B; Step S160), and determines whether a combination of the printer ID as a determination target and the photo to be purchased (print image) is present in the purchase ledger in a number equal to or greater than the upper limit value of the printable number (here, a case where the printable number is one will be described, but the number of sheets may be other than one) (Step S160C; Step S160). The server device 100 can determine the printable number (upper limit value of the purchasable number) per printer for each photo (for each image) in response to an instruction from the terminal device 200 for a celebrity. The printable number per printer may be the same number regardless of the image as in the example shown in FIG. 17A described later (in this example, one, but may be other numbers), or may be different depending on the image as in the example (modification example) shown in FIG. 17B. In addition, as in the example (modification example) shown in FIG. 17C, the number of sheets may be different depending on the image and the attribute of the user (in this example, whether the user is a free member or a paid member, but may be other attributes).

### Actions Based on Purchase Availability

### In Case Where Purchase Is Available

In a case where the number of combinations present in the purchase ledger is less than the upper limit value of the printable number (N in Step S160C), the server device 100 transmits the photo to the terminal device 300 for a fan corresponding to the printer ID or the fan ID (fan account) (Step S170A; Step S170), and adds a purchase record to the purchase ledger (Step S190). In this case, the server device 100 can perform billing processing for the purchase of the photo and permit the purchase on condition that payment of consideration is made. Specifically, the server device 100 can determine information indicating the billing amount for the first user by referring to information indicating the purchase price of the print image set according to the number of requests for the print image. These pieces of information can be recorded in the recording device 180. The "information indicating the purchase price" and the "information indicating the billing amount" may be the amount of money itself or may be the number of points corresponding to the amount of money.

The server device 100 can allow the terminal device 300 for a fan, which is the transmission destination of the photo or the like, to not be a specific terminal device in a case where the fan (first fan) specified by the fan ID is the same. For example, even in a case where the same fan accesses the server device 100 from a smartphone in some cases and accesses the server device 100 from a tablet terminal in other cases, it can be determined that it is sufficient that the fan IDs are the same, and the transmission to such a terminal device is also included in "transmitting the photo or the like to the terminal device 300 for a fan (first terminal device)" in the present invention. In a case where the terminal device 300 for a fan is allowed to not be a specific terminal device, it may be conditional that the terminal device serving as the transmission destination of the photo or the like may be a terminal device that has been authenticated by the server device 100, that an application software (the first program described above) dedicated to each terminal device may be installed, and that simultaneous use may be limited to one terminal device per fan ID.

In the present invention, the transmission or communication (including notification) to such a terminal device can also be expressed as "transmitting the photo or the like to the fan ID or the fan account". The same applies to the following description.

The terminal device 300 for a fan displays the purchased photo (print image) on the display 308 and causes the printer 400 to print the photo (step S350). The display of the photo can be performed in the same manner as in the example of FIG. 9, and a background color may be added to the periphery of the image (the entire background or a part of the image, for example, the vicinity of the upper right and the lower left may be colored). FIG. 14 is a diagram showing an example of a screen in which the photo is being printed on the terminal device 300 for a fan (display 308). On a screen 910 shown in FIG. 14, a phrase or an illustration (here, an animation in which a circular symbol is rotated) indicating that the photo is being printed (being printed) is displayed in a region 910A. In addition, the terminal device 300 for a fan displays, in a region 910C in a lower part of the screen, a message prompting the fan (first user) to comment on or react to the photo under the control of the first program (step S350). In the example of FIG. 14, an icon indicating the reaction is displayed in a region 910B in the lower part of the screen.

FIG. 15 is a diagram showing an example of a screen in a state in which the printing is completed on the terminal device 300 for a fan (display 308). On a screen 912 shown in FIG. 15, a message indicating that the printing is completed is displayed in a region 912A. In addition, a period in which the time-limited printing is performed is displayed in a region 912B. An image of the printed photo is displayed in a region 912C, and an icon for the fan to react is displayed in a region 912D. The user can express his or her feelings (for example, being moved, thinking it is cool, thinking it is cute, being touched, finding it funny, liking it) by tapping the reaction button. A button for commenting on the photo is displayed in a region 912G, and the fan transitions to a comment input screen by tapping the button. Once the photo has been printed, the user can input a comment or the like (comment or reaction) on the photo (step S360). The server device 100 may treat the input of the comment or the like as an "operation" on the image distribution system 10 and set an upper limit value of the number of printable sheets in accordance with the operation history. Such an aspect will be described later in the section of "Modification Example".

The server device 100 can display the comment or the like input by the user on the terminal device 200 for a celebrity in association with the photo posted by the celebrity or the like (steps S180 and S220), and thus the celebrity or the like can know the reaction of the fan (user). In addition, the server device 100 can count the number of comments or the like input by the fan and display the number on the photo (step S220).

In a region 912E, the group name, the full name, the representative image, and the message (in the actual screen, the message is text-displayed in a portion of "XXX...") of the celebrity are displayed. A button for displaying a photo album (a menu for managing and displaying photo images purchased so far) is displayed in a region 912F, and the display transitions to a photo album display screen by tapping the button. A button for purchasing the same photo again is displayed in a region 912H (in a case where the upper limit number of sheets is not reached).

In a case where the user fails to print the photo, the server device 100 may exclude the number of failed printing attempts from the count of the number of printable sheets. In addition, the server device 100 can display the photo purchased and printed by the user on the terminal device 300 for a fan even after the distribution period elapses. In addition, the server device 100 may display the photo in different modes before and after the decision to purchase. For example, a display mode in which only a part of the photo is displayed before the purchase is decided, the image is made unclear, the resolution is lowered, or a wording, a figure, or a symbol such as "not purchased" is superimposed is considered.

The server device 100 updates the history of the photo purchased by the fan and the history of comments and the like (step S190). In addition, the server device 100 can manage the purchase history in a case where the user purchases and prints the photo. The server device 100 can perform, for example, billing, consumption of points, granting of points, and updating of the number of prints per month. In addition, the server device 100 may pay a reward or grant points to the celebrity or the like who has posted the photo according to the purchase status of the photo by the fan.

### In Case Where Purchase Is Unavailable

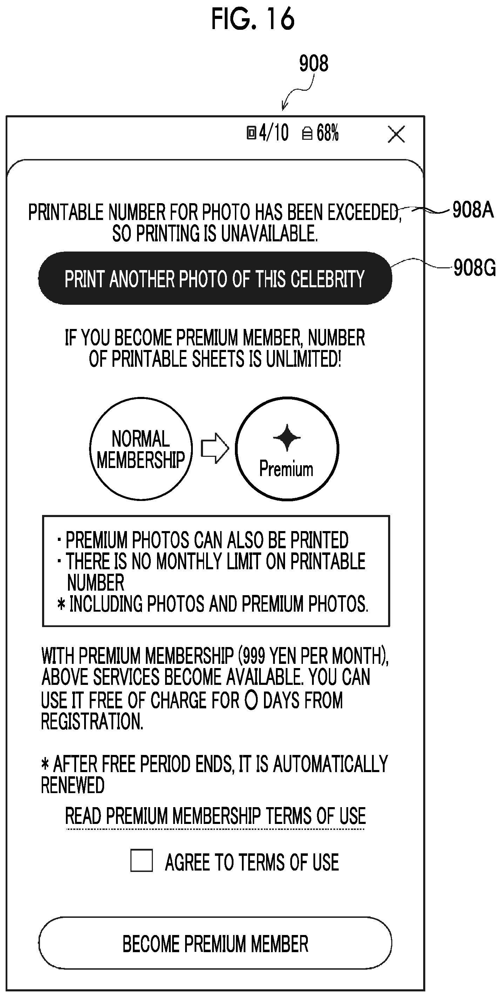

In step S160C, in a case where the number of combinations present in the purchase ledger is equal to or greater than the upper limit value of the printable number (Y in step S160C; step S160), the server device 100 notifies the terminal device 300 for a fan or the fan ID corresponding to the printer ID of the purchase rejection (not permitted) (step S170B; step S170). In this case, the server device 100 can transmit a message (see an example of FIG. 16 described later) for suggesting the purchase of the photo (for example, the photo that is not purchased and has the same subject ID for the printer ID, the photo that is not purchased and corresponds to the list shown in FIG. 8, or the like) that can be purchased and printed by the user (fan) to the terminal device 300 for a fan (step S170C; step S170).

For example, in the ledger shown in FIG. 13A, since there is one combination of "printer ID: PR00001, purchased image: P001.jpg", the fan (fan ID: ID001) corresponding to the printer ID: PR00001 cannot purchase the photo of the image P001.jpg any more (in a case where the printable number per printer is one), but since there is no combination of "printer ID: PR00001, purchased image: P004.jpg" in the above ledger, the fan corresponding to the printer ID: PR00001 can purchase one photo of the image "P004.jpg".

In addition, as described below, the server device 100 may transmit a message for suggesting the change to the membership type having a large upper limit value or having no upper limit of the printable number to the terminal device 300 for a fan.

FIG. 16 is a diagram showing an example of a screen in a case where the purchase is unavailable in the terminal device 300 for a fan. In a screen 908 shown in FIG. 16, a message indicating "the purchasable print limit of the photo has been exceeded, so that printing is unavailable" is displayed in a region 908A. In addition, a button for transitioning to a purchase screen of other purchasable photos is displayed in a region 908G, and a guide to become a premium member (an example of the "message for suggesting the change to the membership type having a large upper limit value or having no upper limit of the printable number") is displayed in the center and the lower part of the screen.

The server device 100 (history management unit 102D or the like; processor 102) updates the transmission history of the photo (purchase history), the history of the comment, and the like (step S190). The server device 100 can record the history in the recording device 180 in the format shown in FIGS. 12A to 13B. The server device 100 may update the history each time the photo is transmitted (purchased), the comment is posted, or the like, or may update the history each time a predetermined period elapses.

As described above, with the image distribution system 10 (an embodiment of the information processing apparatus, the operation method of the information processing apparatus, and the program according to the present invention) according to the first embodiment, the number of printable sheets of the photo per printer is limited to a predetermined number, so that the scarcity of the photo is ensured, the satisfaction of the user is increased, and the user can be motivated to own the printer.

### Modification Examples

### Setting of Number of Printable Sheets According to Attribute of User

The upper limit value of the number of printable sheets per printer in the image distribution system 10 may be the same for all images (for example, one sheet per printer) as shown in FIG. 17A, or may be changed depending on the image as shown in FIG. 17B (modification example). In addition, as shown in FIG. 17C (modification example), the number of printable sheets per printer may be changed depending on the attribute of the user (here, whether the user is a free member or a paid member) or the image. Further, a plurality of ranks may be provided for the paid members, and the number of printable sheets may be changed depending on the rank.

In addition to or instead of changing the number of printable sheets depending on the attribute of the user (fan), another benefit may be provided to the user. Examples of such a benefit include limited-edition goods with the name of the user or the celebrity, an invitation to a limited event, and the like, but the present invention is not limited to these examples. By providing such a benefit, it is possible to satisfy the desire of the fan to own the photo while suppressing the decrease in the scarcity of the photo due to an increase in the number of printed sheets and preventing the resale of the photo, and to improve the motivation of the fan to support the celebrity. Such a response can also be made to the "setting of the number of printable sheets according to the purchase history and/or the operation history" described below.

### Setting of Number of Printable Sheets According to Purchase History and/or Operation History

In the present invention, the upper limit value of the printable number may be changed according to the purchase history of the photo by the fan (the request history of the image by the first user) and/or the operation history related to the server device 100 (information processing apparatus) by the fan (that is, according to at least one of the purchase history or the operation history). FIG. 18 is a table showing an example in which the number of printable sheets per image is changed according to the total number of purchased sheets (an example of the "request history of the print image"). The server device 100 (the user management unit 102A, the history management unit 102D, and the like; the processor 102) may set the printable number according to the number of purchased sheets in a predetermined period (monthly, yearly, or the like) instead of setting the printable number according to the total number of purchased sheets as shown in FIG. 18.

In addition, examples of the above-described "operation history" include registration as a member, a change in the membership type (free or paid, or the rank of the paid member), making a comment or a reaction (or the number of times of making a comment or a reaction), and the like. The server device 100 (the user management unit 102A, the history management unit 102D, and the like; the processor) may limit the comment or the reaction to be considered as the operation history to a positive content in order to respond to a meaningless comment, a defamation, or the like intended to increase the printable number. FIG. 19 is a table showing an example of a history of the comment and the reaction (an example of the operation history). The server device 100 (the user management unit 102A, the history management unit 102D, and the like; the processor 102) can record such an operation history in the recording device 180 and display the operation history on the display 12 or the display 208 according to an operation of the administrator of the server device 100, the celebrity, or the like. The server device 100 may record such an operation history in association with the printer ID (the individual identification information of the printer 400).

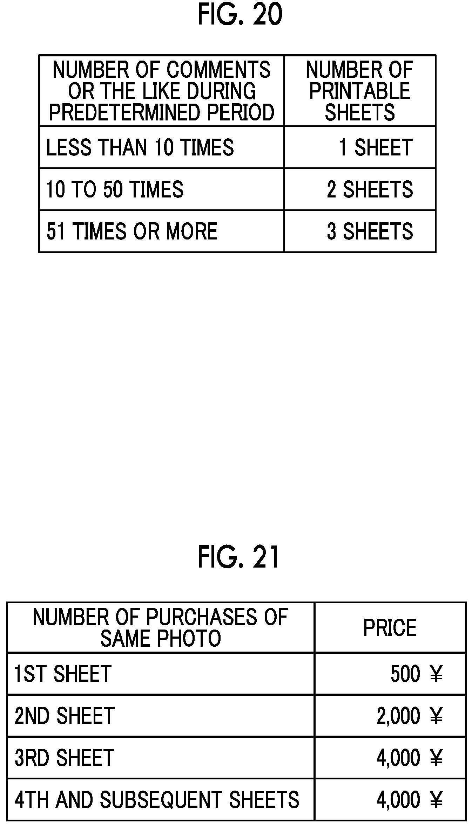

Regarding the operation history shown in FIG. 19, the server device 100 can count the number of comments or reactions and set the printable number according to the counting result. FIG. 20 is a table showing a setting example of the number of printable sheets according to the number of comments in a predetermined period (predetermined period). In this way, the number of printable sheets may be increased for a user who makes many comments or the like. The server device 100 can set a specific period of the "predetermined period" and the "number of printable sheets" according to an operation of the celebrity or the like (second user).

The server device 100 can analyze the history of the comment or the reaction (timing, number of times, content, and the like) and ascertain, for example, "to which celebrity or the like (subject, photographer), in which event, at what timing, and with what content comments or the like were made" and present the result to the celebrity or the like (display on the display 208 or the like). The celebrity or the like can promote the sales of the photo by reflecting the analysis result in the event, the posting timing of the photo, the number of posts, the content of the photo, and the like.

### Example of Price Setting According to Increase in Number of Printed Sheets

In a case where the purchase of a plurality of the same photos is allowed, the celebrity side may set a uniform price (price per photo or number of points) regardless of the number of purchased sheets, or may set a different price according to the number of purchased sheets. FIG. 21 is a table showing an example of price setting according to the number of purchased sheets of the same photo. In this example, the price per photo is increased as the number of purchased sheets is increased (points corresponding to the price may be set). According to such price setting, the price per photo is increased as the number of purchased sheets is increased, so that the resale of the photo can be suppressed (since there is a limit to the price that a general fan can pay for the purchase of the photo, it is considered that the profit from the resale is reduced as the price of the original photo is increased, and the motivation to resell the photo can be weakened), and the desire of the fan that "I want to purchase a plurality of photos of the celebrity I support even if the price is high" can be satisfied.

The server device 100 (processor 102) can set such information in response to the operation of the celebrity or the like, and record the information in the recording device 180. The set or recorded information can be displayed on the display 12 or the display 208 in response to the operation of the administrator of the server device 100, the celebrity, or the like.

### Processing in Case Where Printing of Plurality of Sheets Is Allowed by One Printer

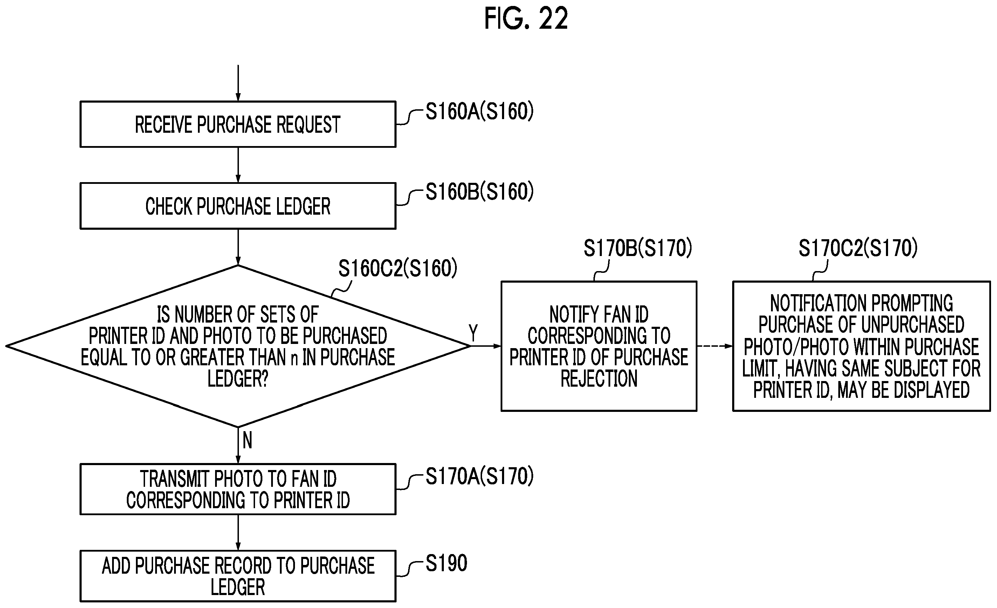

In the image distribution system 10, as described above for the examples of FIGS. 17A to 18, the number of photos that can be printed by one printer can be set. As in the example shown in FIG. 17A, one sheet may be printed per printer, or as in the example shown in FIG. 17B, FIG. 17C, or FIG. 18, a plurality of photos may be printed by one printer. FIG. 22 is a flowchart showing processing in a case where printing of a plurality of sheets is allowed by one printer. To describe an aspect shown in FIG. 22 with a focus on differences from the flowchart of FIG. 11, in a case where the server device 100 receives the purchase request (step S160A; step S160), the server device 100 (image management unit 102B, history management unit 102D, and the like; processor) determines whether a combination of the printer ID as a determination target and the photo to be purchased (print image) is present in the purchase ledger in a number of n or more, which is the upper limit value of the printable number (here, a plurality of sheets) (step S160C; step S160). In a case where the combination is present in the purchase ledger in n or more (step S170B), the server device 100 notifies the terminal device 300 for a fan or the fan ID corresponding to the printer ID of the purchase rejection (non-permission) (step S170B; step S170). In this case, as in the flowchart of FIG. 11, the server device 100 can transmit a message (see the example of FIG. 16) for suggesting the purchase of the photo (for example, the photo for which the subject ID is the same and the number of purchases has not reached the upper limit value (within the limited number of sheets) for the printer ID, the un-purchased photo corresponding to the list shown in FIG. 8, or the like)_to the terminal device 300 for a fan (step S170C2; step S170).

### Sharing of Printer by Plurality of Persons

In the image distribution system 10 described above, the plurality of users can be prohibited from sharing one printer. This is in consideration of, as described above, short-term time-limited printing and responses to events based on the position information of the user; however, in a modification example of the present invention, the sharing of the printer may be allowed within a limited range. The server device 100 can limit the condition for allowing the sharing (the number of users (fans) who share the printer, the membership type (whether sharing is limited to paid members or is also allowed for free members), the period for allowing the sharing, and the like) in response to an instruction from the celebrity or the like.

While the embodiments of the present invention have been described above, the present invention is not limited to the above-described aspects and can be modified in various manners.

### Explanation of References

10: image distribution system
12: display
100: server device
102: processor
102A: user management unit
102B: image management unit
102C: image processing unit
102D: history management unit
102E: input/output control unit
140: operation unit
150: speaker
170: input/output interface
180: recording device
190: bus
200: terminal device for celebrity
202: camera
204: microphone
206: speaker
208: display
210: operation unit
212: processor
214: communication interface
216: memory card
218: flash memory
300: terminal device for fan
302: camera
304: microphone
306: speaker
308: display
310: operation unit
312: processor
314: communication interface
316: memory card
318: flash memory
400: printer
905A: region
905C: region
905D: region
905E: region
906: screen
906A: region
906B: region
906C: region
906D: region
906E: region
906F: label
906H: region
906I: region
908: screen
908A: region
908G: region
910: screen
910A: region
910B: region
910C: region
912: screen
912A: region
912B: region
912C: region
912D: region
912E: region
912F: region
912G: region
912H: region
926: screen
S100 to S190: step executed by server device
S200 to S220: step executed by terminal device for celebrity
S300 to S360: step executed by terminal device for fan

## Claims

1. An information processing apparatus comprising a processor,
wherein, in response to a request for a print image from a first terminal device that is a terminal device used by a first user, the processor is configured to:
refer to a history of the request from the first terminal device or a history of the request for the print image; and
in a case where the history is determined to satisfy a predetermined condition, transmit the print image to the first terminal device to permit the first terminal device to cause a printer associated with the first terminal device to print the print image, and
the predetermined condition is a condition based on individual identification information of the printer.

2. The information processing apparatus according to claim 1, wherein the processor is configured to:
make the determination by referring to a non-transitory and tangible recording medium in which at least the individual identification information of the printer and a transmission history of the print image to the first terminal device are recorded in association with each other, and
update the history based on a result of the determination.

3. The information processing apparatus according to claim 2, wherein the processor is configured to make the determination by referring to information indicating association between user identification information of the first user and the individual identification information, the information being recorded on the recording medium.

4. The information processing apparatus according to any one of claims 1 to 3, wherein, for the printer, the processor is configured to make the determination using, as the predetermined condition, a condition in which the number of the print images transmitted to the first terminal device is less than an upper limit value of a printable number of the print images.

5. The information processing apparatus according to claim 4, wherein the processor is configured to make the determination by referring to the upper limit value set based on an image request history by the first user or an operation history related to the information processing apparatus by the first user.

6. The information processing apparatus according to claim 5, wherein the operation history includes at least one of a comment or a reaction to the print image.

7. The information processing apparatus according to any one of claims 4 to 6, wherein the processor is configured to make the determination by referring to the upper limit value set for each image.

8. The information processing apparatus according to any one of claims 1 to 7, wherein the processor is configured to determine information indicating a billing amount for the first user by referring to information indicating a purchase price of the print image, the purchase price being set according to the number of requests for the print image.

9. The information processing apparatus according to any one of claims 1 to 8, wherein the processor is configured to:
receive an image from a second terminal device that is a terminal device used by a second user and register the image as the print image; and
transmit information based on the history of the request from the first terminal device or the history of the request for the print image to the second terminal device.

10. The information processing apparatus according to any one of claims 1 to 9, wherein the processor is configured to set the predetermined condition in response to a request from the second terminal device.

11. The information processing apparatus according to any one of claims 1 to 10, wherein the processor is configured to permit printing of the print image in a predetermined period.

12. The information processing apparatus according to any one of claims 1 to 11, wherein the processor is configured to:
receive designation of a subject and/or a photographer from the first user via the first terminal device; and
transmit an image in which the subject is captured and/or an image captured by the photographer to the first terminal device as the print image.

13. An operation method of an information processing apparatus including a processor, the operation method comprising:
via the processor, in response to a request for a print image from a first terminal device that is a terminal device used by a first user,
referring to a history of the request from the first terminal device or a history of the request for the print image; and
in a case where the history is determined to satisfy a predetermined condition, transmitting the print image to the first terminal device to permit the first terminal device to cause a printer associated with the first terminal device to print the print image, and
wherein the predetermined condition is a condition based on individual identification information of the printer.

14. A non-transitory, computer-readable recording medium on which a program for causing, when read by a computer, the computer to operate as a first terminal device that is a terminal device of a first user is recorded, in response to an instruction from the first user, the program causing the computer to execute:
processing of receiving information including at least designation of a print image;
processing of transmitting the received information to the information processing apparatus according to any one of claims 1 to 12; and
processing of causing a printer associated with the computer as the first terminal device to print the print image received in response to the transmission of the information.

15. A non-transitory, computer-readable recording medium on which a program for causing, when read by a computer, the computer to operate as a second terminal device that is a terminal device of a second user, in response to an instruction from the second user, the program causing the computer to execute:
processing of transmitting an image to the information processing apparatus according to any one of claims 1 to 12;
processing of causing the processor of the information processing apparatus to set the predetermined condition; and
processing of acquiring information based on the history from the information processing apparatus and outputting the information to an output device.
